# EUROPEAN PATENT APPLICATION

(11) **EP 4 342 278 A1**
(43) Date of publication of application: **27.03.2024**
(21) Application number: 23195875.2
(22) Date of filing: 07.09.2023
(51) Int. Cl.: A01C 7/20, A01C 7/08

(54) **SEEDER DEPTH CONTROL**

(30) Priority: 21.09.2022 US 202217949604
(71) Applicant: Deere & Company, Moline, IL 61265 (US)
(72) Inventor: HARMON, ANDREW W, 68168 Mannheim (DE); GRAHAM, WILLIAM DOUGLAS, 68163 Mannheim (DE)
(74) Representative: Holst, Sönke

(57) **Abstract**

One or more techniques and/or systems are disclosed for air seeding using an agricultural seeder. The agricultural seeder includes an air seeder for an agricultural implement having a frame, a plurality of seeding units coupled to the frame, and a linkage coupling an arm to the frame, wherein the arm is coupled to a ground engaging member. The air seeder further includes an actuator having a piston and cylinder arrangement operationally coupled to the arm and configured to adjust a ground penetration depth of the ground engaging member. The piston and cylinder arrangement include a two-stage cylinder operable to change a height of the ground engaging member by movement of the two-stage cylinder to adjust the ground penetration depth of the ground engaging member.

## Description

### BACKGROUND

Agricultural seeders, such as air carts and other seeding work vehicles/devices, are configured for applying seed, fertilizer, and/or other particulate commodities to a field. Seeders typically include one or more containers and a metering system having a seed meter that meters out a predetermined quantity of the commodity from the container as the work vehicle moves across the field. Seeders include seeding openers that are ground following members that rely on local depth gaging of the ground to allow for metered commodity to be seeded. The adjustment of the depth of the seeding openers is often performed manually, which can be time consuming and cumbersome.

### SUMMARY

One or more techniques and systems are described herein for air seeding having improved seeding depth adjustment. In one implementation, an air seeder for an agricultural implement comprises a frame, a plurality of seeding units coupled to the frame, and a linkage coupling an arm to the frame, wherein the arm is coupled to a ground engaging member. The air seeder further comprises an actuator having a piston and cylinder arrangement operationally coupled to the arm and configured to adjust a ground penetration depth of the ground engaging member. The piston and cylinder arrangement include a two-stage cylinder operable to change a height of the ground engaging member by movement of the two-stage cylinder to adjust the ground penetration depth of the ground engaging member.

In another implementation, an actuator for an air seeder comprises a piston and cylinder arrangement configured to operate at a plurality of discrete set points, and a linkage configured to operationally couple the piston and cylinder arrangement to a movable arm capable of rotation at a pivot point. A piston of the piston and cylinder arrangement is movable to the plurality of discrete set points to rotate the arm at the pivot point and to cause a ground engaging member coupled to the moveable arm to change a seeding depth. Additionally, the linkage is coupled to a frame of the air seeder, wherein the frame supports a plurality of seeding units, and the frame does not move in response to movement of the piston.

In another implementation, a method of air seeding depth control comprises configuring an air seeder for adjustable depth control using an actuator having a plurality of discrete set points, wherein the actuator is operationally coupled to an intermediate arm of the air seeder. The method further comprises controlling the actuator from a remote user interface to adjust a seeding depth by changing a ground penetration depth of a ground engaging member of the air seeder. A position of the intermediate arm is changed by a pivoting motion to adjust the seeding depth, and a position of a frame supporting a plurality of seeding units of the air seeder is not changed.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is a perspective view of an agricultural seeding arrangement in which various examples can be implemented.
FIGURE 2 is a component diagram of an agricultural seeding machine in which various examples can be implemented.
FIGURE 3 is a component diagram illustrating an actuator for a seeder in one operational state according to one implementation.
FIGURE 4 is a component diagram illustrating an actuator for a seeder in another operational state according to one implementation.
FIGURE 5 is a component diagram illustrating an actuator for a seeder in another operational state according to one implementation.
FIGURES 6A, 6B, and 6C are diagrams illustrating different operational states of a piston and cylinder actuator according to one implementation.
FIGURE 7 is a component diagram illustrating an actuator for a seeder according to another implementation.
FIGURE 8 illustrates an example of a method for configuring an air seeder according to one implementation.
FIGURE 9 is a block diagram of an example computing environment suitable for implementing various examples.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

The methods and systems disclosed herein, for example, may be suitable for use in different seeders and seed delivery or metering applications (e.g., different types of volumetric metering applications). That is, the herein disclosed examples can be implemented in different seeders other than for particular types of seeds and/or delivery systems, such as other than for specific farm seeder vehicles for particular seeding applications. In some examples, the herein disclosed examples are implemented with an air seeder for seeding small grains (e.g., wheat, barley, oats, canola, peas, lentils, etc.) that allows for remote seeding depth adjustment.

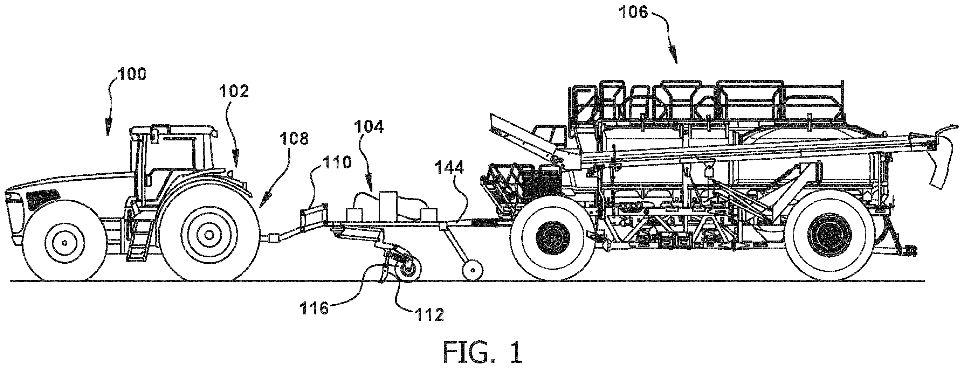

FIGURE 1 is a component diagram illustrating an example implementation of a system that may utilize one or more portions of the aspects and examples described herein. In the implementation illustrated in FIGURE 1, a vehicle 100, illustrated as a tractor, can perform different operations, such as a ground working operation in a field (e.g., air seeding) using different tools or implements. In some implementations, the vehicle 100 has track systems 108 installed thereon. In other implementations, the vehicle 100 has wheels instead of track systems installed on the rear or both the front and rear of the vehicle 100. It should be noted that while various examples are described in connection with a tractor having a particular configuration, the systems and methods described herein may also be utilized with other types of vehicles and implements.

The vehicle 100 in some examples includes a chassis 102, which provides attachment points for the vehicle 100. For example, a work tool can be connected to the front or back of the chassis 102. The work tool is movably connected to the chassis 102 in some examples. In the illustrated example, the work tool is an air seeder 104 coupled to an air cart 106, which is coupled to the chassis 102. In some examples, the air seeder 104 can be any type of air tool configured to perform air seeding, such as configured as an air drill, or other type of agricultural seeding machine.

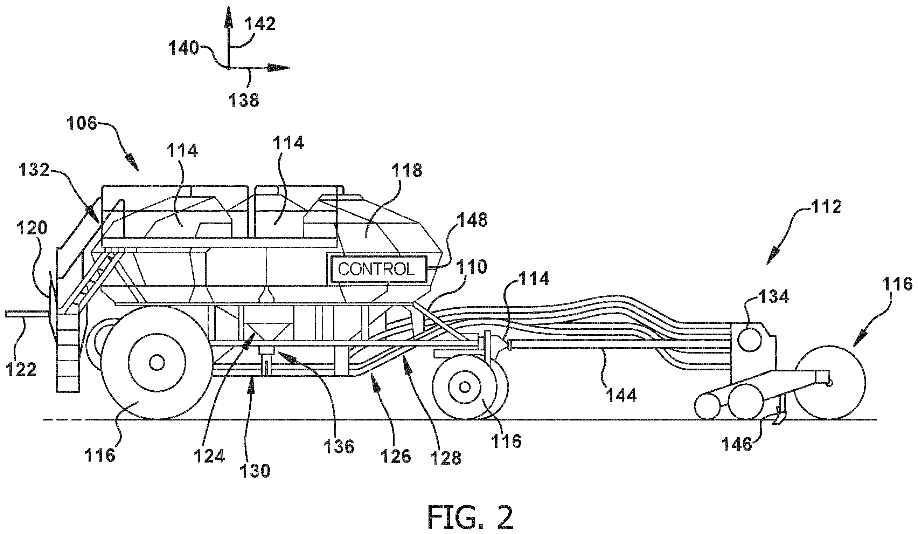

In one example, the air seeder 104 is configured as part of an agricultural seeding machine that includes a frame 110 on which are mounted a plurality of individual seeding units 112. In some examples, each seeding unit 112 is coupled to a tool frame (e.g., frame of the air seeder 104) towed by the vehicle via a rear tow bar 144 and having a parallel linkage 200 (see also FIGURES 2-5) so that the individual seeding units 112 can move up and down to a limited degree relative to the frame 110 (e.g., the tow bar 144 allows for pulling the air cart 106 behind the tool, such as the air seeder 104). A plurality of storage tanks 114 (e.g., commodity containers) hold commodity such as seed or fertilizer that is delivered pneumatically to a minihopper on each seeding unit 112 in various examples.

Each seeding unit 112 is configured to form an open furrow in the soil beneath the seeding machine into which seed is deposited (e.g., air seeding). Other components, such as ground engaging members (e.g., tines or other ground openers 146), closing members, and packing wheels are also mounted to and form part of the seeding units 112, and are operable to open and close the furrow over the deposited seed and to firm the soil in the closed furrow. In one particular implementation as shown in FIGURE 2, the air seeder 104 includes the frame 110 (e.g., chassis) movable with a plurality of wheels 116. It should be noted that the air cart 106 also includes a plurality wheels 116 in various examples. It should be noted that different tire options can be implemented, for example, to accommodate row widths and reduce soil compaction.

The frame 110 can be assembled from rigid beams, bars, brackets, or other structures and may support the components as disclosed herein. One or more of the wheels 116 support the frame 110 on terrain and enable movement of the various components across the terrain. As shown, the frame 110 extends between a front end 118 (e.g., first end) and a rear end 120 (e.g., second end) of the agricultural seeding machine arrangement. A tow bar 122 extends from the frame 110 at the rear end 120 for attaching (e.g., towing), a liquid fertilizer dispenser or anhydrous ammonia fertilizer dispenser behind the air cart 106. It should be noted that different have three configurations of the air seeder 104 are contemplated, including, but not limited to: 1. Row units (e.g., rows of seeding units 112) mounted on a folding frame supplied by a tank mounted on a center section of the same frame; 2. Row units mounted on the folding frame supplied by the air cart 106 towed behind the tool frame (e.g., arranged as the vehicle 100 followed by the air seeder 104 (the tool), followed by the air cart 106); and 3. Row units mounted on the folding frame supplied by the air cart 106 that is between the vehicle 100 and the tool, namely the air seeder 104 (e.g., the vehicle 100, followed by the air cart 106, followed by the air seeder 104). That is, FIGURE 1 illustrates a "tow between" or leading configuration, and FIGURE 2 illustrates a "tow behind" or trailing configuration.

As can be seen, the storage tanks 114 are supported on the frame 110. The storage tanks 114 contain seed, fertilizer, and/or another particulate or granular commodity. Additionally, in some examples, the storage tanks 114 include a liquid commodity. There may be any number of storage tanks 114 (e.g., four storage tanks).

Additionally, the air cart 106 further includes at least one metering system 124. The metering system 124 in some examples is a volumetric metering system. The metering system 124 is configured to receive commodity from the storage tanks 114 and meter commodity to a downstream component. In some examples, the metering system 124 is supported by the frame 110 and is disposed generally underneath the storage tanks 114. The metering system 124 in various examples includes a plurality of metering roller assemblies (e.g., knob, element, shaft, and coupler) that actuate (e.g., rotate) to meter out the commodity from the storage tanks 114. During operation, particles of the commodity within one of the storage tanks 114 moves vertically downward toward the metering system 124. The metering system 124 operates to meter out the commodity from the storage tanks 114 at a predetermined, controlled rate as the air cart 106 and the trailing air seeder 104 move across the field.

A delivery system 126 is also provided. The delivery system 126 include at least one delivery run 128. The delivery run(s) 128 define a fluid pathway for delivery of the commodity away from the air cart 106. In some examples, the plurality of the runs 128 include a respective run structure 130 (e.g., a primary tube or pipe) that is supported below the metering system 124. The run structures 130 in some examples are rigid pipe segments that are fixed to the frame 110. The run structures 130 are in fluid communication with downstream components (e.g., downstream pipe segments in the respective run 128, downstream manifolds, and/or rows of seeding units 112).

For example, the runs 128 conduct a flow of air from the rear end 120 to the front end 118 and away from air cart 106. Airflow within the runs 128 in some examples is generated by one or more fan(s) or other source(s) 132 mounted on the rear end 120 of the air cart 106. The one or more blowers (e.g., fan(s)) or other source(s) 132 provide one or more source(s) of flowing fluid(s) at one or more different pressure(s) as may be necessary and/or desired to carry the one or more different commodities to the rows of seeding units 112. In some examples, a first run structure defines a first run passage configured to receive an associated first fluid flowing from an associated first source 132 at a first pressure, a second run structure defines a second run passage configured to receive an associated second fluid flowing from an associated second source 132 at a second pressure, a third run structure defines a third run passage configured to receive an associated third fluid flowing from an associated third source 132 at a third pressure, etc.

The runs 128 are operably connected with the metering system 124 such that particles of the commodity (e.g., seeds) metered out by the metering system 124 are received by selected ones of the runs 128. In some examples, the particles move substantially vertically downward into the selected runs 128. Once in the runs 128, the air stream therein propels the metered particles away from the air cart 106 and toward the rows of seeding units 112.

In some examples, at least one of the runs 128 of the delivery system 126 are operably connected with a downstream metering system 134. As shown in FIGURE 2, the downstream metering system 134 can be supported by the rows of seeding units 112. It should be appreciated that the plurality of rows of seeding units 112 can include respective downstream metering systems 134. Additionally, in some examples, some rows of seeding units 112 include a respective downstream metering system 134 and others may not.

Furthermore, the delivery system 126 include at least one manifold regulator 136. The manifold regulator 136 is supported by the frame 110 in some examples. The manifold regulator 136 is operably disposed between the metering system 124 and two or more of the run structures 130, and between the pressure sources 132 and the storage tanks 114. In some implementations, the manifold regulator 136 is configured for selectively changing the pathway for the commodity from a first storage tank 114 through a selected one of the delivery runs 128 by movement of a valve member relative to a body member of a commodity valve, and simultaneously also for automatically delivering pressure to the first storage tank 114 supplying the commodity in accordance with the selected delivery run pathway selected. For example, the manifold regulator 136 can be manually or automatically moved to select a first position of the valve member relative to the body in which commodity metered from the metering system 124 is payed out from a first storage tank 114 to a first one of the runs 128 for delivery to a respective row of seeding units 112. The manifold regulator 136 can further be manually or automatically moved to select a second position of the valve member relative to the body in which commodity metered from the metering system 124 is metered out from the first storage tank 114 to a second one of the runs 128 for delivery to a different row of seeding units 112.

In operation, the air cart 106 according to the illustrated example is configured to be towed by another vehicle, such as a tractor (e.g., the vehicle 100 shown in FIGURE 1). In other examples, air cart 106 is a self-propelled vehicle. In some examples, the air cart 106 (e.g., air drill) is part of or operates in combination with any type of agricultural seeding machine that contains a bulk amount of a commodity, which meters out the commodity from the bulk amount, and moves the metered commodity away from the air cart 106 for planting in the ground. In some examples, the commodity delivered from the air cart 106 is metered further downstream before being planted using one or more seed metering configurations. The air cart 106 and air seeder 104 with the rows of seeding units 112 are merely an example where one or more portions of various examples may be implemented. One or more features of the various examples may be included on a different work vehicle, such as a planter, a commodity cart, or other work vehicle without departing from the scope of the present disclosure.

It should be noted that in the illustrated example, a longitudinal axis 138 (e.g., primary axis) is indicated for reference purposes. The longitudinal axis 138 may be substantially parallel to a direction of travel of the air cart 106. Thus, the longitudinal axis 138 may be parallel to the fore-aft axis of the air cart 106. A lateral axis 140 is also indicated in FIGURE 2. The lateral axis 140 is perpendicular to the longitudinal axis 138 and extends between opposite lateral sides of the air cart 106. Furthermore, a vertical axis 142 is indicated in FIGURE 2 for reference purposes. In some examples, a control unit 148 can be used to control operations of one or more portions of the air cart 106. For example, the control unit 148 comprises one or more microprocessors that utilize commands and/or programs to operate the example air cart 106.

In some examples, the air cart 106 with the air seeder 104 together define an agricultural seeding machine that is configured for delivering the commodity with the one or more rows of seeding units 112. Each row unit of the rows of seeding units 112, thus, includes features for respectively tilling the soil, opening a furrow in the soil, depositing the commodity into the furrow, and closing the furrow. In some examples, the rows of seeding units 112 are connected together and arranged in series along the lateral axis 140. It should be noted that although only one row of seeding units 112 is shown in FIGURE 2, it should be appreciated that similar rows of seeding units 112 can be included and disposed in series along the lateral axis 140. The rows of seeding units 112 are connected with the air cart 106 via the rear tow bar 144. Accordingly, the rows of seeding units 112 are disposed behind the air cart 106 and the towing vehicle with respect to the longitudinal axis 138 in various examples. However, the rows of seeding units 112 can be disposed between the air cart 106 and the towing vehicle in some examples and/or the rows of seeding units 112 can be directly connected with the air cart 106 (e.g., directly connected with the frame 110 of the air cart 106) without departing from the scope of the present disclosure.

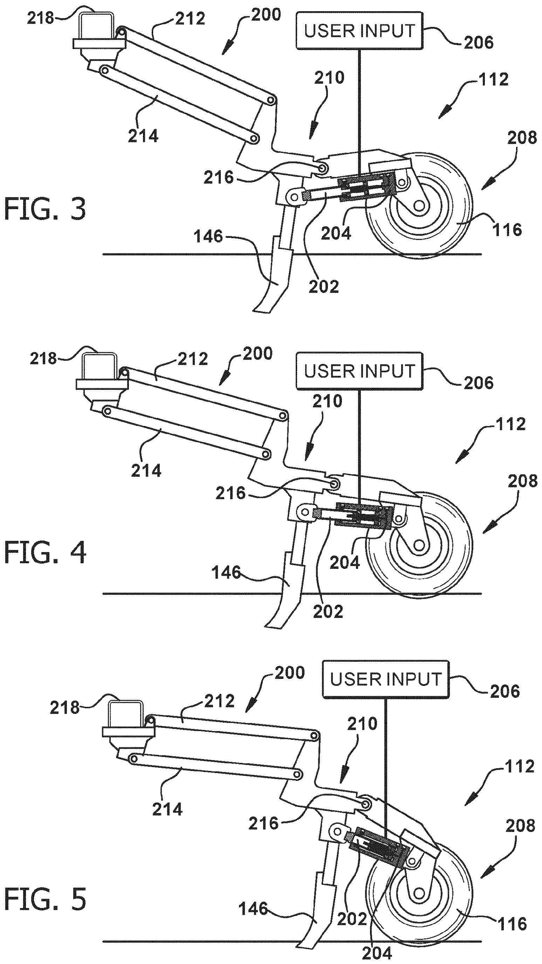

Various examples allow remote depth adjustment of the rows of seeding units 112, which includes remote adjustment of a depth of the ground openers 146. That is, various examples are configured to remotely adjust a ground penetration depth of the ground openers 146, such as to provide fine adjustment of the penetration depth of the ground openers 146 without manual intervention or interactions with the rows of seeding units 112 and/or the ground openers 146. Thus, in various examples, automated depth adjustment of the rows of seeding units 112, including the ground openers 146 allows for easier and faster changes to the penetration depth in a robust design as described in more detail herein. In some examples, such as illustrated in FIGURES 3-5, three-position remote adjustment is provided. That is, the rows of seeding units 112 are remotely adjustable to change a ground penetration depth (e.g., a seeding depth) without manual operation of the seeding units 112 or the components thereof by the user or operator. In one example, an actuator, illustrated as a piston 202 and cylinder 204 arrangement, is operable in combination with the seeding units 112 to adjust a seeding depth thereof, in particular, to adjust a height of the ground openers 146 to vary ground penetration depth in an automated manner. That is, as described in more detail herein, different positions of the piston 202 define different heights of the ground openers 146, and thereby define different corresponding penetration depths of the ground openers 146.

In the illustrated example, FIGURE 3 shows a full stroke position of the piston 202, FIGURE 4 shows a nominal stroke position of the piston 202, and FIGURE 5 shows a closed position of the piston 202. That is, in the full stroke position, the piston 202 is fully extended from the cylinder 204; in the closed position, the piston 202 is fully retracted into the cylinder 204; and in the nominal stroke position, the piston 202 is partially extended from the cylinder 204 in-between the full stroke position and the closed position. It should be noted that the nominal stroke position can be adjusted as desired or needed to position the piston 202 at any point between fully extended and closed. That is, the nominal stroke position can be halfway or at fifty-percent (50%) of full extension or at some other percentage or level of extension. Similarly the full stroke position of the piston 202 in some examples can be less than a one-hundred percent (100%) operationally extended position from the cylinder 204. For example, the extended positions of the piston 202, namely the full stroke position and the nominal stroke position can be adjusted, such as based on the configuration and/or depth requirements for the seeding units 112, the configuration of the air seeder 104, the configuration of the air cart 106, the seeding or soil requirements or conditions, the type of seeds being used, etc. As such, the positions of the piston 202 can be defined to differently vary the ground penetration depth level of the seeding units 112.

In some examples, the cylinder 204 is a two-stage cylinder having three operational positions or that mechanically defines the full stroke position and the nominal stroke position of the piston 202. That is, the structural and/or operational configuration of the cylinder 204 sets or defines the operational positions of the piston 202, namely the full stroke position, the nominal stroke position of the piston 202, and the closed position of the piston 202. It should be noted that variations and modifications are contemplated. For example, the cylinder 204 is various examples can be any multi-position or multi-stage cylinder 204, such as having more or less than three positions. That is, in some examples, the cylinder 204 has two positions or stages (e.g., fully extended and fully retracted), four positions or stages, etc. In some examples, the cylinder 204 does not have a fixed number of stages or positions, but is a "smart" cylinder that is operable to define one or more positions or stages between the full stroke position and the nominal stroke position. In some examples, the actuator is a position controlled electrical actuator having a continuously variable piston length (e.g., infinitely variable). That is, any length of actuation of the piston 202 can be provided instead of mechanical stepwise or incremental actuation lengths.

It should be noted that although the seeding units 112 are shown with a configuration having the parallel linkage 200, other configurations are contemplated. For example, the seeding units 112 in some examples having a single arm configuration instead of the parallel linkage 200 configuration having two arms 212, 214.

In operation, the position of the cylinder 204 is adjusted based on user or operator input in some examples (e.g., operator inputs received within a cab of the vehicle 100). For example, inputs received at a user input 206 allow for remote adjustment of the seeding units 112. That is, in response to receiving a control signal (e.g., adjustment signal) from the user input 206, the cylinder 204 is operable to change a position of the piston 202, such as between one of the full stroke position, the nominal stroke position, and/or the closed position of the piston 202. The control signal can be any type of signal that causes the cylinder 204 to change a position of the piston 202 in response thereto. It should be noted that the control signal in some examples indicates the desired or required position of the piston 202 and in other examples indicates that movement of the piston 202 to the next available position linearly if desired or required. In some examples, the user input 206 is part of a user interface, such as within the cab of the vehicle 100, that also provides feedback or an indication of the current position of the piston 202, and thus, a current ground penetration depth of the seeding units 112. As such, the operator is able to adjust a seeding depth of the seeding units 112, such as based on soil conditions (e.g., moisture), type of seed, etc. That is, in various examples, the operator is able to adjust the seeding depth of the seeding units 112 to a desired or optimal depth.

The user input 206 can be configured in different ways and provided at different locations. In one example, the user input 206 is a selectable member allowing for the selection of one of three possible depth positions using a "billboard" on the air seeder 104. That is, operation of a switch, button, or knob, causes movement of the piston 202 and depth adjustment of the seeding unit 112 (wherein no software control is used). As should be appreciated, this adjustment is not a manual or physical changing of position of the ground opener 146, but is a user input that results in movement of the piston 202 to change the penetration depth of the ground openers 146 in some examples. In other examples, the input at the user input 206 is received in the cab of the vehicle 100 as described in more detail herein. For example, the setting of the position of the piston 202 in some examples is accomplished via input using the in-cab display of the vehicle 100 (e.g., standard versus integrated pneumatic downforce). The control input, namely the user input 206, can be any type or kind of input allowing user interaction to control operation of the piston 202 in various examples.

In some examples, the depth adjustment operation of the seeding units 112 is semiautomatically or automatically controlled. That is, based on inputs or other feedback received from one or more sensors (e.g., soil moisture sensors, soil compaction sensor, global positioning system (GPS) sensors, etc.), the seeding depth position of the seeding units 112, namely a penetration depth of the ground opener 146, is automatically adjusted to obtain an optimal seeding depth based on one or more sensed conditions (e.g., "hunting" for moisture). For example, the piston 202 is automatically controlled in some examples to adjust the penetration depth of the ground opener 146 to improve seeding operation (e.g., closed loop control). In one or more examples, the automatic adjustment of the penetration depth of the ground opener 146 is based on one or more of empirical data, seeding simulations, machine learning, etc. In some examples, a depth adjustment circuit is provided wherein the pressure is monitored and used in a feedback control loop to change the packing pressure applied by the seeding units 112.

As can be seen in FIGURES 3-5, the piston 202 is operable to change a length or position of the ground opener 146 relative to a trailing end 208 of the seeding units 112, namely a trailing wheel 116 of the seeding units 112, by movement at a pivot point 216 of the arm 210. That is, a position of the ground opener 146 is changed by the movement of the piston 202 to thereby adjust a relative height of the ground opener 146 and resulting in changing a penetration depth of the ground opener 146 resulting by pivoting movement or rotation of the arm 210 at the pivot point 216. The pivot point 216 in various examples is configured or provided as any type or kind of pivoting or rotating member (e.g., a pivoting or rotating pin). As such, in various examples, rotation or pivoting of the arm 210 about the pivot point 216 causes a change in a length of the arm 210 between the parallel linkage 200 and the wheel 116, which results in a change in a height of the ground opener 146 relative to the other components (e.g., the wheels 116). That is, as the arm 210 pivots, the ends of the arm 210 become closer or farther apart along an axis extending therebetween. It should be noted that the location of the pivot point 216 can be varied as desired or needed, such as based on a configuration of the components, a desired or required amount of depth change, etc.

As can be seen, in the full stroke position (see FIGURE 3), the ground opener 146 is at a lowest or deepest penetration state, in the nominal stroke position (see FIGURE 4), the ground opener 146 is at an intermediate penetration state, and in the closed position (see FIGURE 5), the ground opener 146 is at a highest or shallowest penetration state. As described in more detail herein, the three-position arrangement is merely for example, and other implementations are possible.

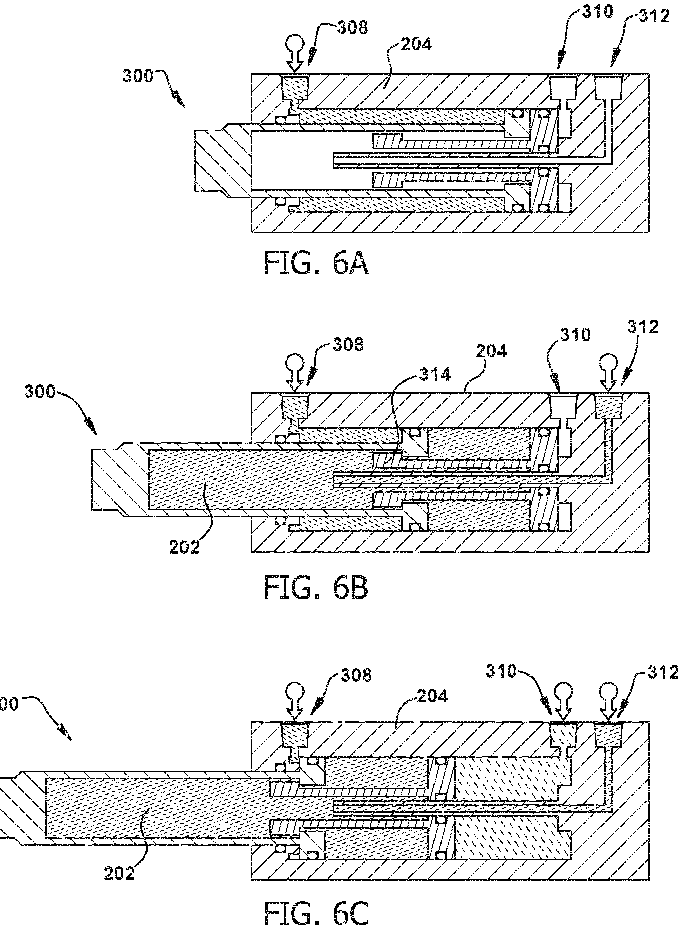

The piston 202 is thereby operable in some examples to provide three-position fine adjustment of the depth penetration of the ground opener 146. In some examples, the full stroke position illustrated in FIGURE 3 is a bump down planting depth, the closed position illustrated in FIGURE 5 is a bump up planting depth, and the nominal stroke position illustrated in FIGURE 4 is a nominal planting depth. For example, as shown in FIGURES 6A, 6B, and 6C illustrating a two-stage cylinder arrangement, a closed piston position 300 (see FIGURE 6A) defines a bump up planting depth, a first-stage stroke position 302 (see FIGURE 6B) defines a nominal planting depth, and a full stroke piston position 304 (see FIGURE 6C, second stage position) defines a bump down planting depth that correspond to the ground opener 146 penetration depths shown in FIGURE 5, FIGURE 4, and FIGURE 3, respectively. That is, in some examples, the piston position defines deep, medium, and shallow depths, respectively, in some examples. In the illustrated example, the cylinder 204 is a two-stage hydraulic cylinder having control ports 308, 310, 312. The control ports 308, 310, 312 are configured as hydraulic ports that control the stroke of the piston 202. That is, hydraulic fluid pressure applied to one or more of the control ports 308, 310, 312 results in a corresponding position of the piston 202. In the illustrated example, pressurization at control port 308 (e.g., applying a pressurization force, such as hydraulic pressure, at this port) causes the piston 202 to be in an initial (retracted) position, namely the closed piston position 300 (see also FIGURE 5). Pressurization at control ports 308 and 312 causes the piston 202 to be in a first-stage extension position at an intermediate stop, namely the first-stage stroke position 302 (see also FIGURE 4). In the illustrated implementation, a mechanical stop 314 (e.g., a rim or shoulder) prevents additional movement at the first-stage position of the piston 202. Pressurization at control ports 308, 310, 312 causes the piston 202 to be in entire stroke extension, namely the full stroke piston position 304, wherein this additional movement of the piston 202 is provided by a second-stage operation thereof.

Thus, controllable pressure applied to the control ports 308, 310, 312 results in changes to a position of the piston 202, namely to different set points to vary the ground penetration depth (e.g., incremental depth positions). In some examples, the control signal received from the user input 206 causes pressure to be applied to one or more of the control ports 308, 310, 312 to thereby adjust the position of the piston 202 relative to the cylinder 204.

While various implementations using a three-position hydraulic cylinder have been described, in some examples, other arrangements such as two-point control is alternatively provided, which can be accomplished using the herein described piston 202 and cylinder 204 or a different configuration. For example, the two-point control is configured as a high-low arrangement that provides the closed piston position 300 and the full stroke piston position 304, but not the first-stage stroke position 302 (e.g., hydraulic control to only two positions). In another example, the cylinder 204 is a hydraulic two-position cylinder (one-stage cylinder) that only allows for a fully extended state and a fully retracted state.

It should be appreciated that different control mechanisms are contemplated and the pressure control scheme illustrated in FIGURE 6 is merely for example and illustration. That is, different control schemes, such as different pressurization control schemes can be used, for example based on the type of cylinder 204, the type of control, etc. Different types and configurations of cylinders 204 can be used and the illustrated cylinder 204 is one example of a piston control mechanism that can be implemented in connection with the various examples described herein. For example, different types of air controlled cylinders (e.g., different configurations of pneumatic cylinders applying pressurized/compressed air or pneumatic pressure) alternatively can be used without departing from the herein described examples. That is, pneumatic air controlled cylinders can be used instead of or in addition to hydraulic fluid controlled cylinders.

In operation, some examples provide multi-position fine adjustment of the seeding units 112 to change a penetration depth of the ground opener 146. It should be appreciated that the herein described examples are operable with the seeding units 112 to change a penetration depth of any component thereof and are not limited to changing the penetration depth of the ground opener 146. For example, in seeding units wherein one or more wheels are used to form the furrow, the herein described examples are operable to adjust a height of the furrow wheel by movement of the piston 202 connected to the wheel (e.g., by adjusting an applied pressure). The fine adjustment of the seeding units 112 can be differently configured based on the amount of movement of the piston 202. That is, the greater the longitudinal movement of the piston 202 (illustrated by the L arrow in FIGURE 6) between the different positions, the greater the amount of fine adjustment provided. In some examples, the fine adjustment of the seeding units 112 is 1/8 inch adjustments (e.g., 1/8 change in the penetration depth of the ground opener 146 between each of the positions 300, 302, 304). In other examples, the fine adjustment of the seeding units 112 is 1/4 inch adjustments. Other adjustment increments are contemplated, such as based on the type of seed being used.

In some examples (see FIGURES 3-5), the movement of the piston 202 causes an adjustment in the length of an arm 210 of the seeding units 112, but not to the parallel linkage 200. That is, an overall end-to-end length of the arm 210 is changed as the piston 202 is extended (longer) or retracted (shorter) and/or pivoted at the pivot point 216 to change the length of the arm 210. However, the frame structure, including the parallel linkage 200 is not moved or adjusted. That is, the frame structure, including the parallel linkage 200 is not raised or lowered to change the ground penetration depth of the ground opener 146. In various examples, the parallel linkage 200 defines a fixed frame structure with the extending arm structure movable as described in more detail herein to change the ground penetration depth of the ground opener 146. In the illustrated example, one end of the arm 210 is fixedly coupled to the parallel linkage 200 and the parallel linkage 200 is coupled in a fixed relationship to the ground opener 146. As such, in various examples, depth adjustability is provided by movement of the arm 210, such as rotation and/or translation of a portion of the arm 210, wherein the frame of the air seeder 104 does not move. In various examples, the arm 210 is configured as an intermediate arm between the parallel linkage 200 and the wheel 116. It should be noted that the piston 202 and cylinder 204 arrangement in some examples controls the linkage at the arm 210 and/or controls the linkage at the wheel 116. That is, the pressure applied by the piston 202 can be at different points. In some examples, the variable ground penetration depth is provided only at a plurality of discrete points.

It should be appreciated that the cylinder 204 and the piston 202 are implementable in different configurations. That is, the position of the cylinder 204 and the piston 202 is shown merely for illustration. The cylinder 204 and the piston 202 can be provided, for example, as part of the structure of the arm 210 (e.g., at one or the ends or therebetween) or separate from and operable to change the length of the arm 210. That is, in some examples where the cylinder 204 and the piston 202 form part of the arm 210, the change in length of the piston 202 relative to the cylinder 204 causes the change in overall length (and the physical structure of the arm 210 does not change). In other examples, the change in length of the piston 202 relative to the cylinder 204 causes the arm 210 to extend or retract, such using a telescoping arm structure or pivoting arm structure for the arm 210. It should also be noted that the piston 202 and cylinder 204 can be positioned above the arm 210 or below the arm 210 in various examples. As such, the piston 202 and cylinder 204 arrangement can be operationally coupled to the arm 210 in different configurations.

Additionally, the linkage used, namely the three bar linkage having the parallel linkage 200 configuration with two arms 212, 214 (defining two bars) and the arm 210 (defining a third bar) is merely an example. The linkage and/or coupling arrangement can be varied as desired or needed. For example, a four bar linkage can be used having an additional arm or bar structure or a two bar linkage can be used having two single arms.

Thus, the movement of the piston 202 causes fine adjustments to the depth of the seeding units 112. In these examples, coarse adjustment (e.g., one inch, two-inches, etc.) adjustments are made manually using adjustment mechanisms of the seeding units 112 (e.g., adjustment brackets, knobs, etc.), such as the handle 218 (see FIGURES 3-5). As described herein, the amount of change resulting from the fine adjustment can be varied as desired or needed. It should also be appreciated that the actuator, namely the piston 202 and cylinder 204 arrangement in some examples is modular to allow for replacement or upgrading, such to change from a basic one-tool control to a higher specification in-cab control allowing for more granular adjustment.

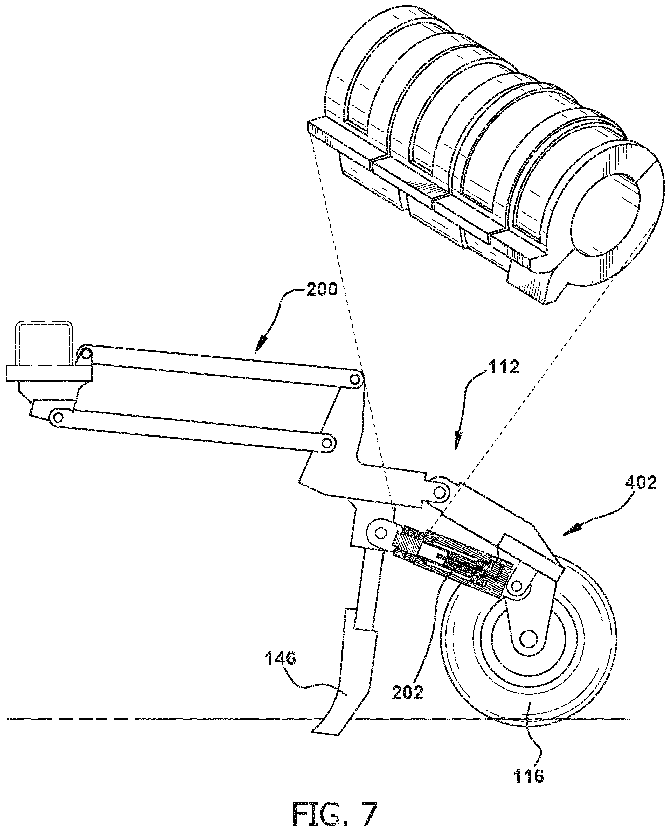

Variations and modifications are contemplated. For example, as shown in FIGURE 7, illustrating the closed position of the piston 202, a plurality of spacers 400 are provided within the cylinder 204. For example, a set of cylindrical spacers 400 are positioned at an end 402 of the cylinder 204 to allow adjustment of the relative position of the piston 202, and thus, adjustment of the penetration depth position to be asymetric. That is the cylindrinal spacers 400 can be used to change a position or adjust one side of the symmetric bump up/bump down configuration described herein where the length of travel between the positions is the same. In this configuration, the length of travel between the positions, for example (i) between the closed piston position 300 that defines a bump up planting depth and the first-stage stroke position 302 that defines a nominal planting depth, and (ii) between the first-stage stroke position 302 and the full stroke piston position 304 that defines a bump down planting depth, are different (in this example the distance in (i) is less than the distance in (ii)). As such, the spacers 400 define an asymmetric bump up/bump down configuration. It should be appreciated that the number of spacers 400, the size of the spacers 400, the location/position of the spacers 400, etc. can be varied to change the asymmetry. It also should be appreciated that that the spacers 400 can be implements in any of the herein described examples, including for the three-point adjustment and two-point adjustment configurations.

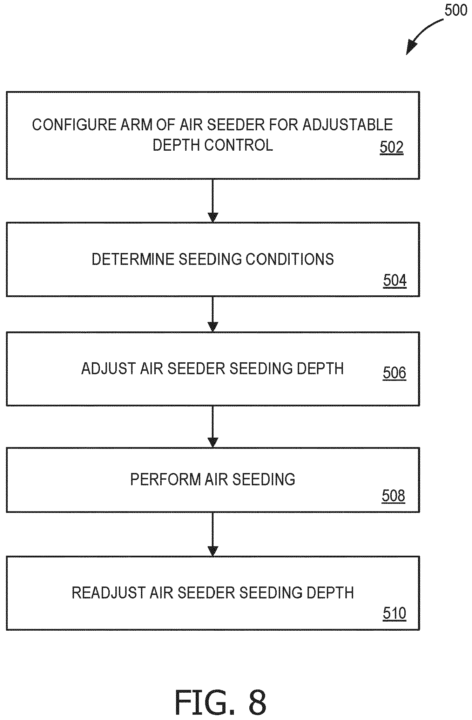

Thus, various examples provide remote control of the ground penetration depth by the seeding units 112, such as a 3-point fine control that is easy to operate, inexpensive to implement, and robust in operation. Some examples allow 1:1 contouring openers (e.g., having 1:1 displacement of the depth gaging wheel to seed boot depth) to have a quick depth adjustment wherein no feedback loop is used. In various examples, no access, namely physical access to the components of the seeding units 112 is needed for the adjustment described herein to be made. As such, a seeder is thereby provided, particularly an air seeder, having improved operating capabilities. For example, easier adjustment for improved seeding depth operations is provided using the air seeder 104 having the seeding units 112 that have a variable seeding depth that is remotely controlled for more optimized seeding as illustrated in the flowchart 500 of FIGURE 8. That is, the flowchart 500 illustrates operations involved in configuring an air seeder, such as the air seeder 104 having the seeding units 112 to improve seeding operations according to one implementation. In some examples, the operations of the flowchart 500 are performed using one or more configurations described in more detail herein.

The flowchart 500 commences at 502, which includes configuring an arm of an air seeder for adjustable depth control, which in various examples described herein includes using the piston 202 and cylinder 204 as the actuator. That is, the piston 202 and cylinder 204 arrangement allows for adjustable movement of the arm 210 of the air seeder 104 by causing a change in a relative height of the ground opener 146 to the frame of the air seeder 104, which results in a change in ground penetration depth of the ground opener 146. It should be noted that in various implementations, the piston 202 and the cylinder 204 are configured as a hydraulically controlled system having multiple stages (two in some examples) that are defined by one or mechanical stops of the piston 202 and cylinder 204 arrangement as described in more detail herein. That is, one or more stages of movement of the piston 202 are mechanically defined in some examples to provide incremental step adjustments. However, in other examples, different mechanical and non-mechanical stops can be used to define different stages or configurations of stages.

At 502, seeding conditions are determined. In some examples, the seeding conditions are based on received data from one or more sensors. In some examples, the seeding conditions are based on observed (e.g., current ground conditions) or predicted conditions (e.g., based on apriori knowledge, historical data or machine learning). The seeding conditions can include any conditions that relate to seeding, such as ground moisture or other ground conditions, type of seeds, geographical location and/or topological data, desired seeding dispersion and/or speed of seeding, etc. The seeding conditions can be determined from a variety of different sources in some examples.

A ground penetration depth of the air seeder is adjusted at 506. For example, based on one or more of the seeding conditions, actuation of the piston 202 and cylinder 204 arrangement is performed, such as changing a position of the piston 202 to thereby adjust the arm 210 that changes the ground penetration depth of the ground opener 146. That is, a stage or level of the piston 202 and cylinder 204 is changed using a received user input in various examples, which causes generation and transmission of a control signal to the piston 202 and cylinder 204 arrangement. With the ground penetration depth of the air seeder adjusted, air seeding with the air seeder is performed at 508. That is, seeding is performed using air dispersion in various examples, which results in seeding at the ground penetration depth. For example, the ground opener 146 creates a furrow having a desired or required depth.

In some examples, the air seeder seeding depth is readjusted at 510. For example, based on changed conditions (e.g., changed seeding conditions or seeding of a different field) or other factors, a new ground penetration depth of the air seeder may be desired or required. That is, actuation of the piston 202 and cylinder 204 arrangement is performed in various examples to cause a change in the ground penetration depth of the ground opener 146 to a different incremental depth.

Thus, various examples provide improved seeding operation using remote actuation of depth control of a seeder. As such, more seeds can be properly and/or accurately dispersed within the ground using an inexpensive and robust control arrangement.

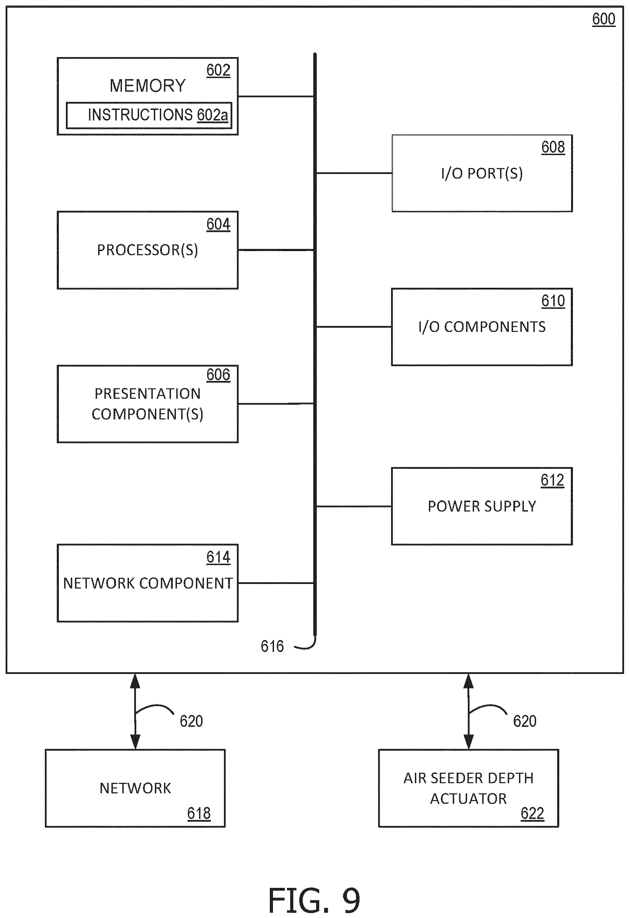

With reference now to FIGURE 9, a block diagram of a computing device 600 suitable for implementing various aspects of the disclosure as described (e.g., operations or functions to control the depth of the air seeder 104). FIGURE 9 and the following discussion provide a brief, general description of a computing environment in/on which one or more or the implementations of one or more of the methods and/or system set forth herein may be implemented. The operating environment of FIGURE 9 is merely an example of a suitable operating environment and is not intended to suggest any limitation as to the scope of use or functionality of the operating environment. Example computing devices include, but are not limited to, personal computers, server computers, hand-held or laptop devices, mobile devices (such as mobile phones, mobile consoles, tablets, media players, and the like), multiprocessor systems, consumer electronics, mini computers, mainframe computers, distributed computing environments that include any of the above systems or devices, and the like.

Although not required, implementations are described in the general context of "computer readable instructions" executed by one or more computing devices. Computer readable instructions may be distributed via computer readable media (discussed below). Computer readable instructions may be implemented as program modules, such as functions, objects, Application Programming Interfaces (APIs), data structures, and the like, that perform particular tasks or implement particular abstract data types. Typically, the functionality of the computer readable instructions may be combined or distributed as desired in various environments.

In some examples, the computing device 600 includes a memory 602, one or more processors 604, and one or more presentation components 606. The disclosed examples associated with the computing device 600 are practiced by a variety of computing devices, including personal computers, laptops, smart phones, mobile tablets, hand-held devices, consumer electronics, specialty computing devices, etc. Distinction is not made between such categories as "workstation," "server," "laptop," "hand-held device," etc., as all are contemplated within the scope of FIGURE 9 and the references herein to a "computing device." The disclosed examples are also practiced in distributed computing environments, where tasks are performed by remote-processing devices that are linked through a communications network. Further, while the computing device 600 is depicted as a single device, in one example, multiple computing devices work together and share the depicted device resources. For instance, in one example, the memory 602 is distributed across multiple devices, the processor(s) 604 provided are housed on different devices, and so on.

In one example, the memory 602 includes any of the computer-readable media discussed herein. In one example, the memory 602 is used to store and access instructions 602a configured to carry out the various operations disclosed herein. In some examples, the memory 602 includes computer storage media in the form of volatile and/or nonvolatile memory, removable or non-removable memory, data disks in virtual environments, or a combination thereof. In one example, the processor(s) 604 includes any quantity of processing units that read data from various entities, such as the memory 602 or input/output (I/O) components 610. Specifically, the processor(s) 604 are programmed to execute computer-executable instructions for implementing aspects of the disclosure. In one example, the instructions 602a are performed by the processor 604, by multiple processors within the computing device 600, or by a processor external to the computing device 600. In some examples, the processor(s) 604 are programmed to execute instructions such as those illustrated in the flow charts discussed herein and depicted in the accompanying drawings.

In other implementations, the computing device 600 may include additional features and/or functionality. For example, the computing device 600 may also include additional storage (e.g., removable and/or non-removable) including, but not limited to, magnetic storage, optical storage, and the like. Such additional storage is illustrated in FIGURE 9 by the memory 602. In one implementation, computer readable instructions to implement one or more implementations provided herein may be in the memory 602 as described herein. The memory 602 may also store other computer readable instructions to implement an operating system, an application program and the like. Computer readable instructions may be loaded in the memory 602 for execution by the processor(s) 604, for example.

The presentation component(s) 606 present data indications to an operator or to another device. In one example, the presentation components 606 include a display device (e.g., within the cab of the vehicle 100), speaker, printing component, vibrating component, etc. One skilled in the art will understand and appreciate that computer data is presented in a number of ways, such as visually in a graphical user interface (GUI), audibly through speakers, wirelessly between the computing device 600, across a wired connection, or in other ways. In one example, the presentation component(s) 606 are not used when processes and operations are sufficiently automated that a need for human interaction is lessened or not needed. I/O ports 608 allow the computing device 600 to be logically coupled to other devices including the I/O components 610, some of which is built in. Implementations of the I/O components 610 include, for example but without limitation, a microphone, keyboard, mouse, joystick, pen, game pad, satellite dish, scanner, printer, wireless device, camera, etc.

The computing device 600 includes a bus 616 that directly or indirectly couples the following devices: the memory 602, the one or more processors 604, the one or more presentation components 606, the input/output (I/O) ports 608, the I/O components 610, a power supply 612, and a network component 614. The computing device 600 should not be interpreted as having any dependency or requirement related to any single component or combination of components illustrated therein. The bus 616 represents one or more busses (such as an address bus, data bus, or a combination thereof). Although the various blocks of FIGURE 9 are shown with lines for the sake of clarity, some implementations blur functionality over various different components described herein.

The components of the computing device 600 may be connected by various interconnects. Such interconnects may include a Peripheral Component Interconnect (PCI), such as PCI Express, a Universal Serial Bus (USB), firewire (IEEE 1394), an optical bus structure, and the like. In another implementation, components of the computing device 600 may be interconnected by a network. For example, the memory 602 may be comprised of multiple physical memory units located in different physical locations interconnected by a network.

In some examples, the computing device 600 is communicatively coupled to a network 618 using the network component 614. In some examples, the network component 614 includes a network interface card and/or computer-executable instructions (e.g., a driver) for operating the network interface card. In one example, communication between the computing device 600 and other devices occurs using any protocol or mechanism over a wired or wireless connection 620. In some examples, the network component 614 is operable to communicate data over public, private, or hybrid (public and private) connections using a transfer protocol, between devices wirelessly using short range communication technologies (e.g., near-field communication (NFC), Bluetooth^{®} branded communications, or the like), or a combination thereof.

The connection 620 may include, but is not limited to, a modem, a Network Interface Card (NIC), an integrated network interface, a radio frequency transmitter/receiver, an infrared port, a USB connection or other interfaces for connecting the computing device 600 to other computing devices. The connection 620 may transmit and/or receive communication media. In some examples, the connection 620 allows communication with an air seeder depth actuator 622 (e.g., the piston 202 and cylinder 204 arrangement) to allow adjustment of the ground penetration depth of the air seeder 104. In various examples, the computing device 600 transmits one or more control signals to the air seeder depth actuator 622 to control operation thereof, such as to adjust the ground penetration depth of the air seeder 104.

Although described in connection with the computing device 600, examples of the disclosure are capable of implementation with numerous other general-purpose or special-purpose computing system environments, configurations, or devices. Implementations of well-known computing systems, environments, and/or configurations that are suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, VR devices, holographic device, and the like. Such systems or devices accept input from the user in any way, including from input devices such as a keyboard or pointing device, via gesture input, proximity input (such as by hovering), and/or via voice input.

Implementations of the disclosure, such as controllers or monitors, are described in the general context of computer-executable instructions, such as program modules, executed by one or more computers or other devices in software, firmware, hardware, or a combination thereof. In one example, the computer-executable instructions are organized into one or more computer-executable components or modules. Generally, program modules include, but are not limited to, routines, programs, objects, components, and data structures that perform particular tasks or implement particular abstract data types. In one example, aspects of the disclosure are implemented with any number and organization of such components or modules. For example, aspects of the disclosure are not limited to the specific computer-executable instructions or the specific components or modules illustrated in the figures and described herein. Other examples of the disclosure include different computer-executable instructions or components having more or less functionality than illustrated and described herein. In implementations involving a general-purpose computer, aspects of the disclosure transform the general-purpose computer into a special-purpose computing device when configured to execute the instructions described herein.

By way of example and not limitation, computer readable media comprises computer storage media and communication media. Computer storage media include volatile and nonvolatile, removable, and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. In one example, computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other nontransmission medium used to store information for access by a computing device. In contrast, communication media typically embody computer readable instructions, data structures, program modules, or the like in a modulated data signal such as a carrier wave or other transport mechanism and include any information delivery media.

While various spatial and directional terms, including but not limited to top, bottom, lower, mid, lateral, horizontal, vertical, front and the like are used to describe the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Of course, those skilled in the art will recognize many modifications may be made to this configuration without departing from the scope or spirit of the claimed subject matter.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Various operations of implementations are provided herein. In one implementation, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each implementation provided herein.

Any range or value given herein can be extended or altered without losing the effect sought, as will be apparent to the skilled person.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure.

As used in this application, the terms "component," "module," "system," "interface," and the like are generally intended to refer to a computer-related entity, either hardware, a combination of hardware and software, software, or software in execution. For example, a component may be, but is not limited to being, a process running on a processor, a processor, an object, an executable, a thread of execution, a program and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device, carrier or media. Of course, those skilled in the art will recognize many modifications may be made to this configuration without departing from the scope or spirit of the claimed subject matter.

In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. An air seeder (104) for an agricultural implement, comprising:
a frame (110);
a plurality of seeding units (112) coupled to the frame (110);
a linkage (200) coupling an arm (210) to the frame (110), wherein the arm (210) is coupled to a ground engaging member (146); and
an actuator (202, 204) having a piston (202) and cylinder (204) arrangement operationally coupled to the arm (210) and configured to adjust a ground penetration depth of the ground engaging member (146), wherein
the piston (202) and cylinder (204) arrangement includes a two-stage cylinder (204) operable to change a height of the ground engaging member (146) by movement of the two-stage cylinder (146) to adjust the ground penetration depth of the ground engaging member (146).

2. The air seeder (104) of claim 1, wherein the two-stage cylinder (204) is operable in only three positions (300, 302, 304), including a full stroke position (304), a nominal stroke position (302), and a closed position (300), each of the positions (300, 302, 304) defining a different ground penetration depth, wherein the closed position (300) defines a bump up planting depth, the nominal stroke position (302) defines a nominal planting depth, and the full stroke position (304) defines a bump down planting depth, and wherein a change in depth between each of the positions (300, 302, 304) is the same.

3. The air seeder (104) of claim 2, further comprising one or more spacers (400) at an end (402) of the two-stage cylinder (204), wherein the closed position (300) defines a bump up planting depth, the nominal stroke position (302) defines a nominal planting depth, and the full stroke position (302) defines a bump down planting depth, wherein a change in depth between each of the positions (300, 302, 304) is not the same.

4. The air seeder (104) of any of claims 1-3, wherein the arm (210) includes a pivot point (216) and the two-stage cylinder (204) is configured to change a position of at least one end of the arm (210) in response to movement of a cylinder portion of the two-stage cylinder (204) causing rotation about the pivot point (216).

5. The air seeder (104) of any of claims 1-4, further comprising a user input (206) remote from the actuator (202, 204), wherein the user input (206) is configured to receive an input and generate a control signal in response to the received input, the control signal transmitted to the actuator (202, 204) to change the ground penetration depth of the ground engaging member (146).

6. The air seeder (104) of claim 5, wherein the user input (206) is positioned within a cab of a vehicle (100) towing the air seeder (104).

7. The air seeder (104) of claim 5, wherein the user input (206) is positioned on the air seeder (104).

8. The air seeder (104) of any of claims 1-7, wherein the two-stage cylinder (204) comprises a hydraulically controlled cylinder.

9. The air seeder (104) of any of claims 1-8, wherein the actuator (202, 204) is automatically controlled in response to sensed conditions received from one or more sensors in a closed feedback loop.

10. The air seeder (104) of any of claims 1-9, wherein the two-stage cylinder (204) is configured to perform three-point ground penetration depth control.

11. The air seeder (104) of any of claims 1-10, wherein the two-stage cylinder (204) is configured to perform two-point ground penetration depth control in a high-low control arrangement.

12. The air seeder (104) of any of claims 1-11, further comprising one or more wheels (116), wherein the piston (202) and cylinder (204) arrangement is mechanically coupled to the arm, the coupling is one of above or below the arm (210), and the arm (210) is configured as an intermediate arm between the linkage (200) and the one or more wheels (116).

13. The air seeder (104) of any of claims 1-12, wherein the piston (202) and cylinder (204) arrangement forms part of the arm (210).

14. A method (500) of air seeding depth control, the method comprising:
configuring (502) an air seeder for adjustable depth control using an actuator having a plurality of discrete set points, the actuator operationally coupled to an intermediate arm of the air seeder; and
controlling the actuator from a remote user interface to adjust (504) a seeding depth by changing a ground penetration depth of a ground engaging member of the air seeder, wherein
a position of the intermediate arm is changed by a pivoting motion to adjust the seeding depth, and
a position of a frame supporting a plurality of seeding units of the air seeder is not changed.

15. The method (500) of claim 14, wherein the controlling is performed based on one or more sensed conditions, the one or more sensed conditions including at least one of observed conditions or received data from one or more sensors.
